Europäisches Patentamt

(19) European Patent Office

Office européen des brevets

(11) Publication number: **0 016 555**
**B1**

(12) # EUROPEAN PATENT SPECIFICATION

(45) Date of publication of patent specification: 27.04.83

(21) Application number: 80300569.3

(22) Date of filing: 26.02.80

(51) Int. Cl.³: **G 03 G 15/04,**
**G 03 B 27/54, G 03 B 15/05**

(54) **Full-frame flash illumination system for a document copying machine.**

(30) Priority: 26.02.79 US 15558
26.02.79 US 15557

(43) Date of publication of application:
01.10.80 Bulletin 80/20

(45) Publication of the grant of the patent:
27.04.83 Bulletin 83/17

(84) Designated Contracting States:
DE FR GB NL

(56) References cited:
DE - A - 2 555 695
DE - A - 2 729 378
DE - U - 6 944 698
DE - U - 7 106 973
US - A - 3 428 397
US - A - 3 697 177

A. C. HARDY et al. "The Principles of Optics"
1932, McGRAW-HILL BOOK COMPANY,
New York and London,
pages 278 to 283

(73) Proprietor: XEROX CORPORATION
Xerox Square - 020
Rochester New York 14644 (US)

(72) Inventor: Avery, Stephen T.
163 Alden Road
Rochester New York 14626 (US)
Inventor: James, D. Rees
5880 Palmyra Road
Pittsford New York 14534 (US)
Inventor: Durbin, John A.
1283 Hunter Circle
Webster New York 14580 (US)
Inventor: Simpson, George R.
12 Austin Drive
Rochester New York 14625 (US)
Inventor: Green, Frederick A.
47 Lost Feather Drive
Fairport New York (US)

(74) Representative: Goode, Ian Roy et al,
European Patent Attorney c/o Rank Xerox Patent
Department 338 Euston Road
London NW1 3BH (GB)

Courier Press, Leamington Spa, England

## Full-frame flash illumination system for a document copying machine

The present invention relates to a full-frame flash illumination system for a document copying machine. The illumination system is of the kind including a housing having a top surface defining an object plane and containing a platen for supporting a document to be copied, a bottom surface accommodating a lens for focusing an image of a document onto an image plane, said housing being completely enclosed by side walls joined to said top and bottom surfaces, and illumination means to intermittently produce light flashes which undergo multiple reflections from the interior surfaces of said housing to provide a uniformly diffuse irradiation at the platen.

As demands for faster copying and duplicating have increased, conventional machines which scan documents in incremental fashion to provide a flowing image on a xerographic drum have proved inadequate. New high speed techniques have evolved which utilize flash exposure of an entire document (full-frame) and the arrangement of a moving photoconductor in a flat condition at the instant of exposure.

In prior art flash illumination systems, the illumination at the document plane can be generally described as either wholly specular, or partially specular, partially diffuse. U.S. Patents 3,777,135; 3,586,849 and 3,669,538 are typical of optical systems of the former type. In each of the disclosed systems, light from a plurality of flash lamps is directly reflected, by means of reflective elements partially enclosing the lamps, toward the object to be illuminated, i.e. a document laying on a platen. Light reflected from the document passes through a lens to be focused onto the image plane. However, a significant portion of the light generated by the light source is absorbed by the housing walls or passes out of the illumination area prior to, and following incidence on, the platen. These illumination losses reduce the amount of light reaching the lens and, therefore, to achieve adequate exposure, a plurality of high intensity light sources utilizing large and costly power supplies are required.

Significant gains in illumination efficiency can be obtained if the light sources are enclosed within an integrating cavity whose walls are made of, or coated with, a nearly diffuse reflecting material. The theoretical implications of diffusely illuminating an object by causing multiple reflections within an "integrating sphere" is set forth in *Principles of Optics*, pp. 278—283 (McGraw Hill, 1932). It is therein disclosed that, if the interior wall of a sphere is coated with a white, diffusely reflecting material with high reflectance, multiple reflections within the sphere produce an almost uniform diffuse illumination of an object plane. Copier illumination systems as disclosed in U.S. Patents 3,697,177 (Booth); 3,498,715 (Gold) and 3,428,397 (Elmer) have attempted to utilize this principle with varying degrees of success. A diffusely reflecting integrating cavity has also been used to achieve uniform fixing of a developed xerographic image as disclosed in U.S. Patent 3,529,129 (Rees).

The Gold and Elmer references are representative of optical systems which illuminate an object plane with light that is both diffuse and specular. In Gold, a pair of lamps are partially enclosed by baffles with reflective interiors. The lamps directly illuminate the object plane with increased illumination directed towards the end of the support by the baffles and by diffuse reflecting surfaces located above the lamps. The housing, however, is not a true integrating cavity since the chamber is not wholly enclosed and many areas are blackened to achieve the specific purposes set forth in the disclosure.

Elmer also uses a pair of lamps partially enclosed by specular reflective elements. A pair of side walls opposite the reflectors provide a first primary diffuse reflection of light from the opposing light source. The end walls provide a second specular reflection of the diffuse illumination incident thereon. This arrangement provides illumination at the object plane which is substantially diffuse and with greater intensity at the edges.

The Booth reference has a pair of light sources which are contained in the upper compartment of a two chamber cavity. Direct rays from the light sources are prevented from going through the lens by making the bottom chamber of narrower cross-section so the top edges intercept the direct rays. The interior housing walls are coated with a diffuse reflecting material except for a darkened area on one of the walls. The object plane is illuminated by direct light from the lamps and diffuse illumination after multiple reflections from the cavity walls.

The present invention is intended to provide a simplified flash illumination system, and is characterised in that said housing has all its interior surfaces except the top surface completely covered with a high reflectivity material such that said surfaces are high diffusely reflective to light incident thereon, and that said illumination means comprises a single flah illumination source positioned within said housing between said top and bottom surfaces.

The invention in effect, fully realises and utilises the superior irradiance efficiency permitted by a properly designed integrating cavity. The lamp, in one embodiment, is partially enclosed by a blocker element which serves to prevent light flashes from being viewed above the platen. Other alternative blocker configurations are described which improve the distribution of light in areas of the platen overlying the lamp while maintaining the desired exposure levels at the image plane.

It will be appreciated that use of a single flash light source of relatively small dimensions yields significant savings relative to prior art elongated, multi-lamp configurations. Savings in power supply costs and mounting and reflector arrays are obtained. Lower voltage operating conditions may permit use of relatively inexpensive electrolytic capacitors. Simplicity of design is achieved since the single light source can be optimized independent of the cavity and can be easily manufactured because of non-critical tolerances.

An illumination system in accordance with the invention will now be described, by way of example, with reference to the accompanying drawings, in which:—

Figure 1 is a perspective view of the illumination housing of the present invention showing the single flash lamp configuration.

Figure 2 is a perspective partial view of the housing showing a first blocker element arrangement.

Figures 3 and 4 illustrate a second lamp blocker configuration with Figure 4 being a cross-sectional view on the line 4—4 of Figure 3;

Figure 5 illustrates a third lamp blocker configuration;

Figure 6 is a side sectional view of the housing showing an alternative lamp location.

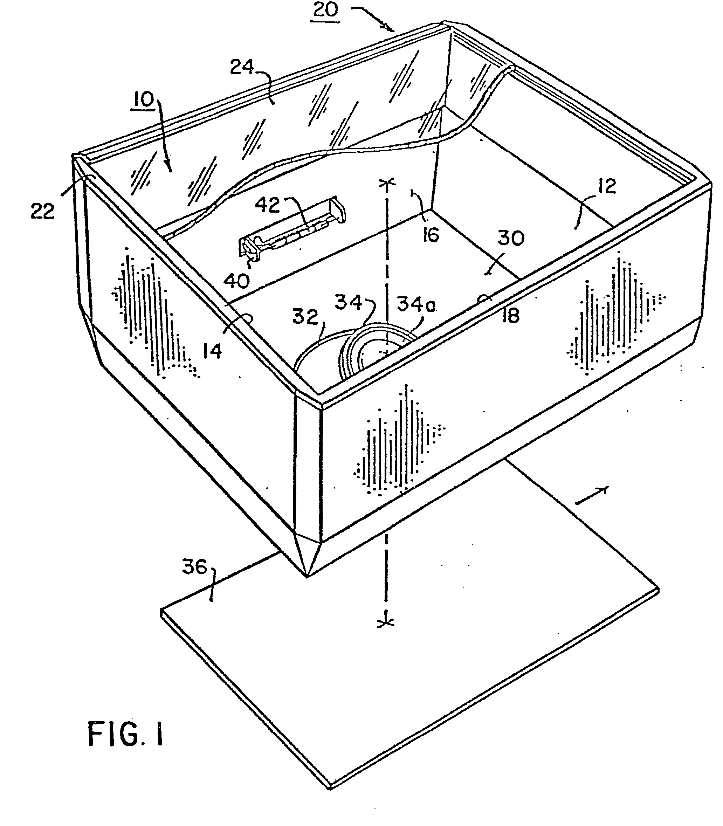

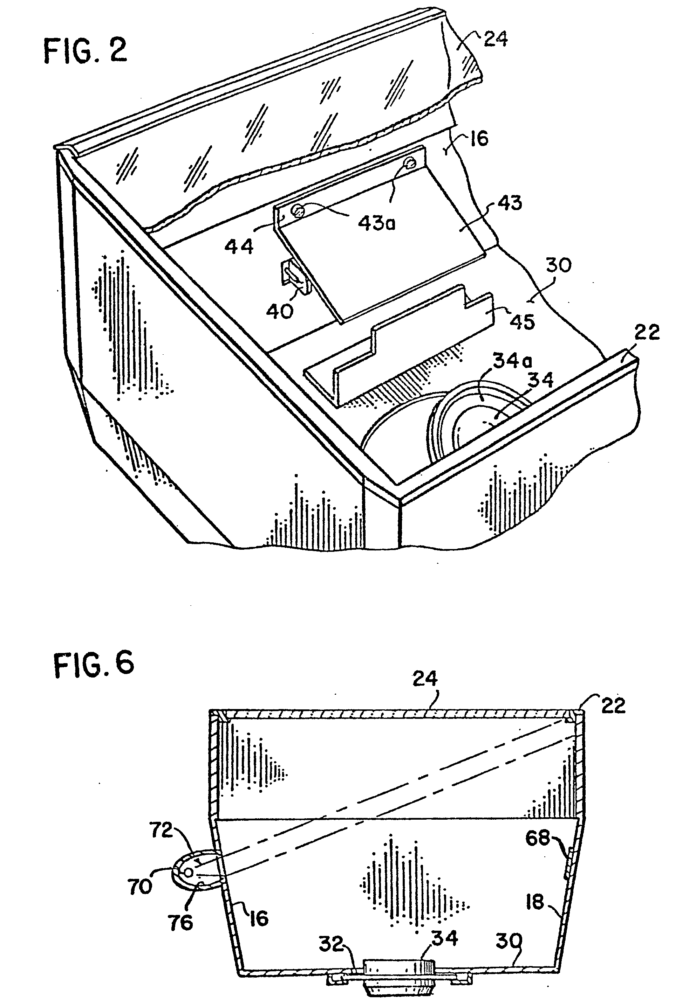

Referring now to the drawings, Figures 1 and 2 illustrate a first embodiment of an integrating optical cavity containing a single flash lamp according to the invention.

A completely enclosed housing 10, generally rectangular in shape, has a first pair of opposing side walls 12, 14 and a second pair of opposing side walls 16, 18. An upper, or top wall 20 includes a rectangular aperture 22 which, at the center thereof, accommodates a glass platen 24 forming the object plane. The platen may have a hinged cover (not shown) which may be pivoted upward to permit open platen copying of materials such as books.

The lower, or bottom, wall 30 has an aperture 32 therein which accommodates a circular lens housing 34. An image plane 36 which may be, for example, a photoconductive sheet to which a charge has been applied is positioned for exposure to light reflected from document platen 24 and transmitted by lens 34. The projected light image selectively discharges the photoconductive sheet resulting in a formation of a latent electrostatic image thereon.

Mounted in the lower half of side wall 16 by bracket 40 is flash illumination source 42, which is of relatively short length compared to the platen length in the same direction. Source 42 in a preferred embodiment is a lamp consisting of an envelope containing xenon gas and a pair of electrodes at each end which are not electrically connected to each other. The lamp is connected to pulsing triggering circuitry (not shown) which may consist of a DC power supply connected across a storage capacitor which in turn is connected to the flash lamp through an inductor. When the pulsing circuit is activated, the lamp undergoes a gas breakdown resulting in a flash of appropriate duration. In operation, the lamp is periodically energized in timed relation to the movement of image plane 36 past the lens.

The interior walls of the cavity (12, 14, 16, 18, and 30) have substantially diffuse reflecting surfaces resulting from coating the interior wall surfaces with a high reflectivity (90%) material. Paints such as Celanese polyester therm setting paint #7 41-13 or Glidden Enamel #424-W-02100 in cellosolve acetate thinner have been found to be acceptable materials.

Barrel 34a of lens housing 34 is similarly coated. The surfaces of the platen may be coated, if desired with anti-reflection coating of a material such as $M_gF_2$ or a multi-layer anti-reflective coating. As is well known in the art, this coating will prevent any platen derived specular reflection from entering the lens.

As shown in Fig. 2, a first blocker element 43 is mounted above lamp 42 and secured to wall 16 by screws 43a fastened through end portion 44. Blocker 43 projects at a slight downward angle relative to wall 16 and is of sufficient width and length to prevent direct light from lamp 42 from being viewed from any portion of platen 24. The top and bottom surfaces of blocker 43 may be coated with the same diffusely reflective material as that applied to the cavity interior.

A second thin blocker element 45 is secured to bottom wall 30 and projects upwardly and laterally a sufficient distance to prevent direct light from lamp 42 from reaching lens 34. Element 45 is of generally rectangular shape except for the omission of the upper corners.

The surfaces of blocker 45 may be coated with the same reflecting material which comprises the coating for the internal cavity walls.

Referring again to Figure 2, an efficient flash illumination system is realized when utilizing a xenon lamp with an overall length of between 12.7 and 17.8 cm and producing a nominal energy of 40 joules at a wavelength of 400 to 700 mm. The lamp, as shown, is mounted approximately 1/3 the height of wall 16 but other locations are possible dependent upon system requirements (so long as the lamp remains outside of the lens field of view). As a practical matter, the closer the lamp is mounted to the top surface of the housing the more difficult it becomes to provide uniform illumination at the surface of the platen overlying the blocker 43.

Blocker elements 43 and 45 can be constructed of any light weight opaque material such as aluminum. The purpose of blocker 43 is to protect an operator from direct flash illumination in situations where the job requirements call for an open platen. The blocker should therefore be of sufficient length and width to completely block a view of the lamp from any point on the platen. The function of blocker 45 is two-fold: to prevent direct light from lamp 42 from entering the lens and for preventing a "hot spot", of intense illumination from forming. The "hot spot", in the absence of the blocker would result from the direct light striking in front of the lens surface by light reflecting downward from the bottom of blocker 43.

It may de desirable, for certain applications, that blockers 43 and/or 45 be translucent. For example, when documents having a relatively large amount of grey background areas are to be copied, the light reflecting from these dark areas only partially discharges the charge on the photoreceptor image plane. The image of opaque blocker element 44 reflected from the partially reflecting platen is in these circumstances, visible as a superimposition on the partially discharged image plane. Making the blocker translucent greatly reduces the unwanted blocker image.

Because of the relatively close positioning of blockers 43 and 45 to the lamp, the diffusely reflecting surfaces facing the lamp may, for some systems, inefficiently direct light to the interior walls. It may, therefore, be desirable to make the blocker surfaces facing the lamp of a specular reflecting material such as polished aluminum.

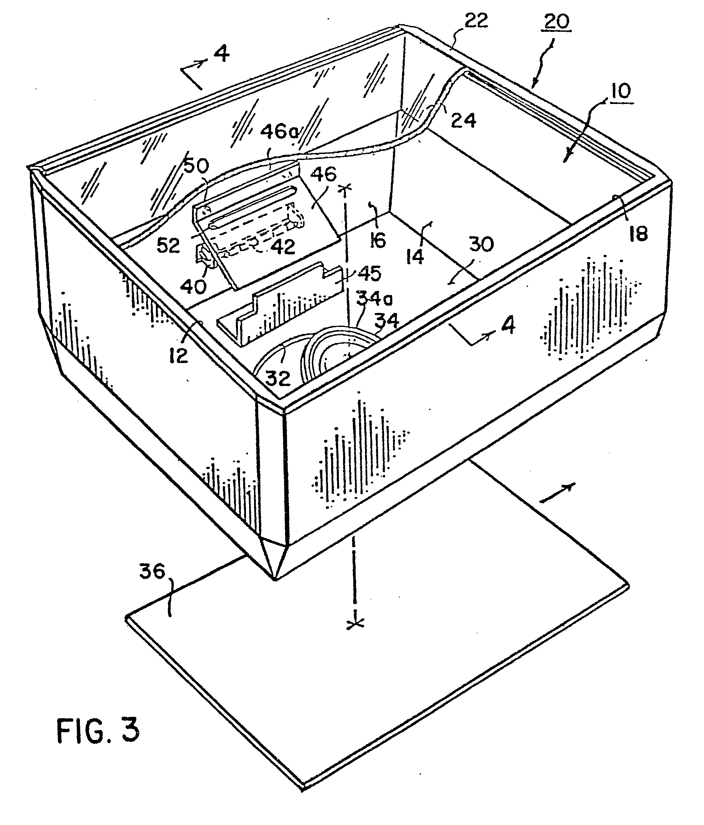

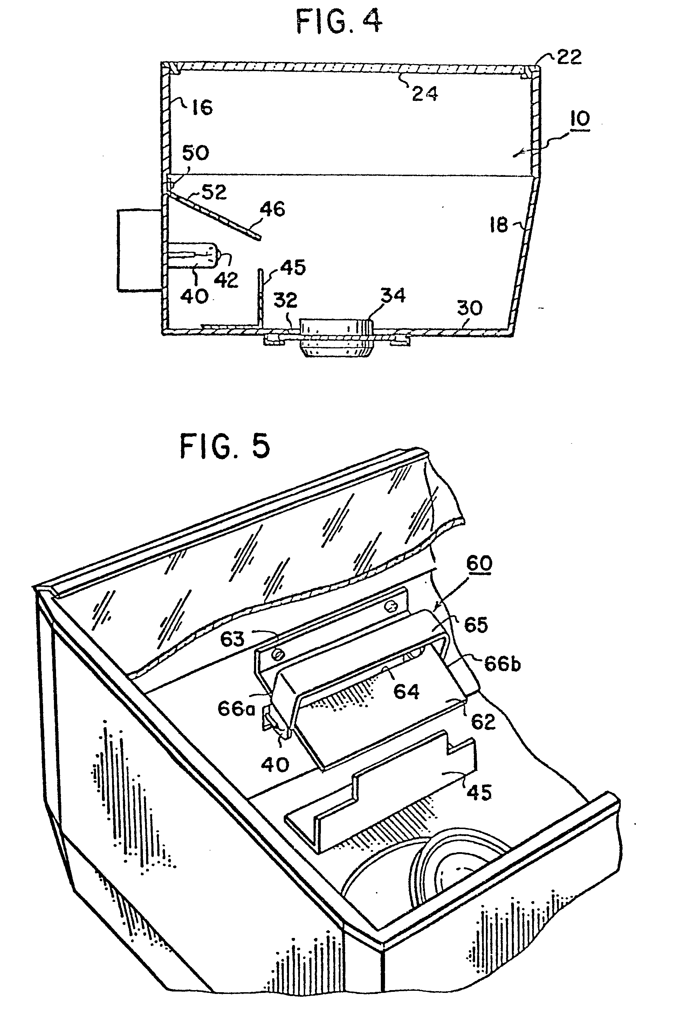

Figures 3 and 4 illustrate a second lamp blocker configuration. In this configuration, a blocker element 46 is mounted above source 42 and secured to wall 16 by screws 50 fastened through end portion 46a. Located at the end of the blocker closest to the wall is aperture 52. Blocker 46 projects at a downward angle relative to wall 16 and is of sufficient width and length to prevent direct light from source 42 from being viewed from any portion of platen 24.

As shown in Figures 3 and 4, aperture 52 is located at the extreme end of blocker 46. The purpose of aperture 52 is to permit entry of a portion of direct light from lamp 42 into the area above the blocker. It has been found that without the presence of aperture 52, illumination of the platen area generally located above blocker 46 may be lower than the remainder of platen. The irradiance level is increased by permitting direct light to exit through aperture 52, reflect off wall 16 and onto the platen. The location of aperture 52 may be varied somewhat provided light is not directly visible through the aperture from any point in the platen.

Figure 5 shows another optical blocking configuration. A blocker assembly 60 is positioned above the lamp. Assembly 60 consists of a bottom plate 62 having an aperture 64 in a generally central location. Plate 62 projects at a downward angle relative to wall 16 and is secured to the wall by screws 63. A generally U-shaped member 65 is secured to the surface of plate 62 along edges 66a, 66b. Member 65 straddles aperture 64 and prevents any direct light exiting from the aperture from reaching the platen. The dimensions of plate 62 are otherwise sufficient to prevent any direct light from lamp 42 from reaching the platen.

It is noted that with this Figure 5 configuration, the aperture can be made more centrally located than the previously described embodiment. The light exiting from aperture 64 is now reflected from the bottom surface of member 65 and, following an additional reflection from the top surface of plate 62, proceeds upwardly in a more evenly distributed fashion.

As in the blocker embodiments of Figures 3 and 4, various combination of diffusely or specularly reflective coating may be applied to the surfaces of blocker 46, plate 62 and member 65. These elements may be constructed of an opaque material such as aluminum or, alternatively, may be of a translucent material.

Figure 6 shows an alternative embodiment of an integrating cavity wherein illumination source 70 of approximately the same dimensions as source 42 is contained within a recess 72 of side wall 16. In this case, the source which again can be a Xenon lamp, would be partially enclosed by a specular reflector 76. If the lamp is sufficiently recessed so that it is not visible from the platen, blocker elements corresponding to 43 and 45 in Figure 2 will not be required. For this configuration, it may be desirable to add a specular reflective strip 68 in wall 18 to achieve the desired irradiation at the platen. Strip 66 can be of brushed aluminum of a height approximating the exit slit of the recess.

From the foregoing, it will be appreciated that integrating cavity 10 is constructed to approximate an integrating enclosure and hence is beneficial to the increase in irradiance which is characteristic of such a construction. The increase is best explained by using, as an example, a point source of radiant energy which is irradiating an elemental surface at some given distance from the source. The irradiation incident upon the surface is of a magnitude $E_0$. If, without changing the intensity of the source or the distance that the elemental surface is positioned from the source, the source is now enclosed within the spherical reflector, a resulting new irradiance, E at the elemental surface is produced. Multiple reflections inside the sphere have greatly increased the irradiance at the elemental surface and a gain factor of $E/E_0$ becomes a function of the average reflectivity of the sphere.

Applying this theoretical analysis to housing 10, it will become apparent that when source 42 is pulsed and caused to flash, light is directed against the cavity walls, and after undergoing multiple reflections from all interior surfaces, produces a near-uniform diffuse illumination at the platen. Significantly, light reflected from the document itself and not directly entering the lens will undergo additional reflections and contribute further to platen irradiance. The illumination system is thus operated at maximum efficiency permitting the use of much smaller, lower energy flash lamps than were heretofore thought possible.

## Claims

1. A full-frame flash illumination system for a document copying machine including a housing (10) having a top surface (20) defining an object plane and containing a platen (24) for supporting a document to be copied, a bottom surface (30) accommodating a lens (34) for focusing an image of a document onto an image plane (36), said housing being completely enclosed by side walls (16) (14) joined to said top and bottom surfaces, and illumination means to intermittently produce light flashes which undergoe multiple reflections from the interior surfaces of said housing to provide a uniformly diffuse irradiation at the platen, characterised in that said housing has all its interior surfaces except the top surface completely covered with a high reflectivity material such that said surfaces are highly diffusely reflective to light incident thereon, and that said illumination means comprises a single flash illumination source (42) positioned within said housing between said top and bottom surfaces.

2. The illumination system of claims 1 further comprising a first blocking element (43) positioned between the source and the platen of sufficient length and width to prevent direct illumination from the source from reaching any portion of the platen.

3. The illumination system of claim 2 wherein said blocking element has an aperture (52) therein.

4. The illumination system of claim 2 or claim 3 further including a second blocking element (45) positioned between the source and the lens of sufficient length and width to prevent direct illumination of the lens.

5. The illumination system of claim 3 wherein said clocking element has an additional blocking element (65) overlying but spaced apart from said aperture said overlying blocking element intercepting and reflecting light emerging from said aperture.

6. The illumination system of any one of claims 2 to 5 wherein the blocking elements are translucent.

7. The illumination system of claim 1 wherein an illumination source (70) is positioned within a recess (76) of one of said side walls (16) whereby direct illumination from said source does not reach said platen.

8. The illumination system of claims 7 wherein the walls of said recess are covered with a specular reflector material.

9. The illumination system of claims 7 or claim 8 wherein the wall (18) opposite said wall (16) containing said recess has coated thereon a specular strip (68) said strip being located so as to specularly reflect direct illumination from said source.

## Revendications

1. Dispositif d'éclairage par éclairs de document entier pour machine de reproduction de document comprenant un boîtier (10) ayant une surface supérieure (20) qui définit le plan d'un objet et contenant une platine (24) pour le support d'un document à reproduire, une surface inférieure (30) recevant une lentille (34) pour la mise au point d'une image d'un document sur un plan d'image (36), le boîtier étant totalement fermé par des parois latérales (16, 14) réunies aux surfaces supérieure et inférieure, et un moyen d'éclairage pour produire par intermittence des éclairs lumineux qui subissent des réflexions multiples sur les surfaces intérieures du boîtier pour fournir à la platine une irradiation uniformément diffuse, caractérisé en ce que la boîtier a toutes ses surfaces intérieures, à l'exception de la surface supérieure, revêtues totalement d'un matériau à haute réflectance de sorte qu'elles provoquent une réflexion hautement diffuse de la lumière incidente, et en ce que le moyen d'éclairage comprend une seule source d'éclairage par éclairs (42) qui est placée à l'intérieur du boîtier entre les surfaces supérieure et inférieure.

2. Dispositif d'éclairage selon la revendication 1, caractérisé en ce qu'il comprend en outre un premier élément de masquage (43) placé entre la source et la platine, ayant une longueur et une largeur suffisantes pour éviter que l'éclairage direct provenant de la source n'atteigne une partie quelconque de la platine.

3. Dispositif d'éclairage selon la revendication 2, caractérisé en ce que l'élément de masquage comporte une ouverture (52).

4. Dispositif d'éclairage selon la revendication 2 ou la revendication 3, caractérisé en ce qu'il comprend en outre un second élément de masquage placé entre la source et la lentille, ayant une longueur et une largeur suffisantes pour éviter l'éclairage direct de la lentille.

5. Dispositif d'éclairage selon la revendication 3, caractérisé en ce que l'élément de masquage comporte un élément de masquage supplémentaire (65), surplombant l'ouverture à une certaine distance, cet élément de masquage en surplomb interceptant et réfléchissant la lumière sortant de l'ouverture.

6. Dispositif d'éclairage selon l'une quelconque des revendications 2 à 5, caractérisé en ce que les éléments de masquage sont translucides.

7. Dispositif d'éclairage selon la revendication 1, caractérisé en ce qu'une source d'éclairage (70) est placée à l'intérieur d'un évidement (76) pratiqué dans l'une des parois latérales (16), de sorte que l'éclairage provenant directement de la source n'atteint pas la platine.

8. Dispositif d'éclairage selon la revendication 7, caractérisé en ce que les parois de l'évidement sont recouvertes d'un matériau à réflé-chissement spéculaire.

9. Dispositif d'éclairage selon la revendication 7 ou la revendication 8, caractérisé en ce que la paroi (18) en regard de la paroi (16) contenant l'évidement est revêtue d'une bande spéculaire (68), cette bande étant placée dans le but de réfléchir de manière spéculaire l'éclairage provenant directement de la source.

**Patentansprüche**

1. Ein Vollbild-Blitzbelichtungssystem für eine Dokument-Kopiermaschine mit einem Gehäuse (10), das eine obere Fläche (20), die eine Objektebene definiert und eine Auflageplatte (24) zum Tragen eines zu kopierenden Dokuments, eine Bodenfläche (30) enthält, in der eine Linse (34) zum Fokussieren eines Bildes eines Dokuments auf eine Bildebene (26) untergebracht ist, wobei das Gehäuse vollständig durch Seitenwände (16, 14) eingeschlossen ist, die durch die obere Fläche und die Bodenfläche verbunden sind, und mit einer Belichtungsvorrichtung, die intermittierend Lichtblitze erzeugt, die von den Innenflächen des Gehäuses mehrfach reflektiert werden, um eine einheitliche diffuse Bestrahlung an der Auflagenplatte zu erhalten, dadurch gekennzeichnet, daß alle Innenflächen, ausgenommen der oberen Fläche, des Gehäuses, vollständig mit einem Material hoher Reflektionsfähigkeit bedeckt sind, derart, daß die Flächen hochdiffus reflektierend für auf sie einfallendes Licht sind, un daß die Belichtungsvorrichtung eine einzige Blitzbelichtungsquelle (42) umfaßt, die in dem Gehäuse zwischen der oberen und der Bodenfläche angeordnet ist.

2. Das Belichtungssystem nach Anspruch 1, das ferner ein erstes Blockierelement (43) aufweist, das zwischen der Quelle und der Auflageplatte angeordnet und von genügender Länge und Briete ist, um zu verhindern, daß eine direkte Belichtung von der Quelle irgendeinen Teil der Auflageplatte erreicht.

3. Das Belichtungssystem nach Anspruch 2, wobei das Blockierelement eine Öffnung (52) darin besitzt.

4. Das Belichtungssystem nach Anspruch 2, oder Anspruch 3, ferner mit einem zweiten Blockierelement (45), das zwischen der Quelle und der Linse angeordnet und von genügender Länge und Breite ist, um eine direkte Belichtung der Linse zu verhindern.

5. Das Belichtungssystem nach Anspruch 3, wobei das Blockierelement ein zusätzliches Blockierelement (65) besitzt, das über der genannten Öffnung jedoch in Abstand davon liegt, wobei das darüberliegende Blockierelement von der Öffnung ausgehendes Licht unterbricht und reflektiert.

6. Belichtungssystem nach irgendeinem der Ansprüche 2 bis 5, wobei die Blockierelemente durchscheinend sind.

7. Das Belichtungssystem nach Anspruch 1, wobei eine Belichtungsquelle (70) innerhalb einer Ausnehmung (76) einer der Seitenwände (16) angeordnet ist, wodurch eine direkte Belichtung von der Quelle die Auflageplatte nicht erreicht.

8. Das Belichtungssystem nach Anspruch 7, wobei die Wände der Ausnehmung bedeckt sind mit einem spiegelnden Reflektormaterial.

9. Das Belichtungssytem nach Anspruch 7 oder 8, wobei die Wand (18), die derjenigen Wand (16) gegenüberliegt, die die Ausnehmung enthält, mit einem spiegelnden Streifen (68) darauf beschichtet ist, wobei der Streifen so angeordnet ist, daß et direkte Belichtung von der Quelle spiegelnd reflektiert.

FIG. 1

FIG. 2

FIG. 6

FIG. 3

# FIG. 4

# FIG. 5